# EUROPEAN PATENT SPECIFICATION

(11) **EP 3 305 144 B1**
(45) Date of publication and mention of the grant of the patent: **20.02.2019**
(21) Application number: 17194423.4
(22) Date of filing: 02.10.2017
(51) Int. Cl.: A47J 31/44

(54) **VENTURI MILK EMULSIFIER DEVICE**
VENTURI-MILCHEMULGATORVORRICHTUNG
DISPOSITIF ÉMULSIFIANT DE LAIT À VENTURI

(30) Priority: 05.10.2016 IT 201600099780
(43) Date of publication of application: 11.04.2018
(73) Proprietor: De'Longhi Appliances S.r.l., 31100 Treviso (IT)
(72) Inventor: DE' LONGHI, Giuseppe, 31100 Treviso (IT); EVANGELISTI, Paolo, 40138 Bologna (IT)
(74) Representative: Rapisardi, Mariacristina

(56) References cited:
- WO-A1-2009/071247
- WO-A1-2015/078858
- US-A1- 2003 232 115

## Description

The present invention refers to a milk emulsifier device and to a coffee machine that incorporates this milk emulsifier device.

Milk emulsifier devices that are connected to a source of steam supplied by the coffee machine are presently known.

The emulsifier device generally has a Venturi mixing chamber connected to a steam inflow channel, to a channel for suctioning milk by Venturi effect, to a channel for suctioning air by Venturi effect supplied with a shut-off valve, and to a channel for outflow of the milk, which, in turn, is connected to an external channel for dispensing the milk.

The milk to be heated is contained in a specific container from which the channel for suctioning milk draws the milk.

This emulsifier device is capable of preparing hot milk with or without froth.

To produce hot milk without froth, the shut-off valve is closed so as to prevent air from being suctioned into the mixing chamber.

To produce hot milk with froth, the shut-off valve is open.

This device suffers from a drawback related to temperature control of the dispensed hot milk. The temperature of the dispensed hot milk can vary depending on the preselected dispensing cycle and the temperature of the milk contained in the container.

A flow regulator inserted along the milk suctioning channel has been proposed for regulating the temperature of the beverage, for example a pump or a pinch valve, which requires a milk suctioning channel made of a deformable material.

The solution that comprises a pump proves to be quite costly and uneconomical in terms of energy consumption.

In the solution that comprises a pinch valve, the latter gradually reduces the flow of milk by gradual constriction of the section of the milk suctioning channel, which, however, cannot always be controlled precisely.

Other more complex solutions for controlling the temperature of the dispensed milk comprise supplementary heating sources in addition to the flow of steam, for example specific electrical resistors.

A known milk emulsifier device is known from US 2003/232115.

The technical task of the present invention is therefore to provide a milk emulsifier device that makes it possible to eliminate the cited technical drawbacks of the prior art.

Within the scope of this technical task, an aim of the invention is to provide a milk emulsifier device that is capable of regulating the temperature of the dispensed hot milk so that the temperature proves to be optimal at all times upon changes in the type of milk-based beverage being produced.

Another aim of the invention is to provide a milk emulsifier device in which temperature control for the milk being dispensed is realized without other heat sources in additional to the flow of steam.

Another aim of the invention is to provide a milk emulsifier device that is simple in construction, reliable in its operation, economical, not very cumbersome and that is manageable.

The technical task, as well as the latter and other aims, according to the present invention, are achieved by a Venturi milk emulsifier device comprising a hollow body having a mixing chamber, a channel for inflow of steam into the mixing chamber, a channel for suctioning air into the mixing chamber by Venturi effect, a deformable channel for suctioning milk into the mixing chamber by Venturi effect, a pinch valve operating on said deformable channel for regulating the flow of suctioned milk, and a channel for outflow of milk from the mixing chamber, characterized in that said milk suctioning channel has a first calibrated hole for connection to the mixing chamber, in that there is provided at least one auxiliary channel for suctioning milk into the mixing chamber by Venturi effect, having a second calibrated hole for connection to the mixing chamber, and in that said pinch valve can be activated in a flow enabling state, corresponding to the suctioning of milk into the mixing chamber through said first and second calibrated holes, and a flow interruption state, corresponding to the suctioning of milk into the mixing chamber solely through said second calibrated hole.

In one embodiment of the invention, to optimize the process of regulating the temperature of the milk dispensed from the outflow channel, a temperature probe for the suctioned milk is provided along the milk suctioning channel, for the temperature of the suctioned milk may not be known *a priori*, not even approximately; the temperature of the suctioned milk may vary for example due to the fact that it can be used for dispensing milk that is at room temperature or milk that has just been taken out of the refrigerator.

Temperature control for dispensed hot milk is ensured by the presence of the first calibrated hole and at least the second calibrated hole through which the milk is suctioned by Venturi effect. The size of the section of the calibrated holes, with the flow of steam being equal, unequivocally and precisely determines the flow of suctioned milk and thus the proportions with which the flow of steam and the flow of milk are mixed.

The channel for suctioning air is equipped with flow regulation means, preferably in the form of a shut-off valve.

The state of the pinch valve, the state of the shut-off valve on the air suctioning channel and the length of time in which the flow of steam is dispensed are obviously correlated with the dispensing cycle selected.

In the case in which the shut-off valve is structured to adjust the opening of the section of the air suctioning channel gradually, the dispensing time can also vary gradually.

Therefore, with respect to a dispensing cycle in which the milk is suctioned trough both calibrated holes, in a different dispensing cycle in which hot milk at a higher temperature is required, with the amount of hot milk dispensed in a cup being equal, the milk will be suctioned only trough the second calibrated hole and the dispensing time will be prolonged accordingly. Further characteristics and advantages of the invention will become more apparent from the description of a preferred, but not exclusive, embodiment of the emulsifier device according to the invention, which is illustrated by way of approximate and non-limiting example in the attached drawings, of which:

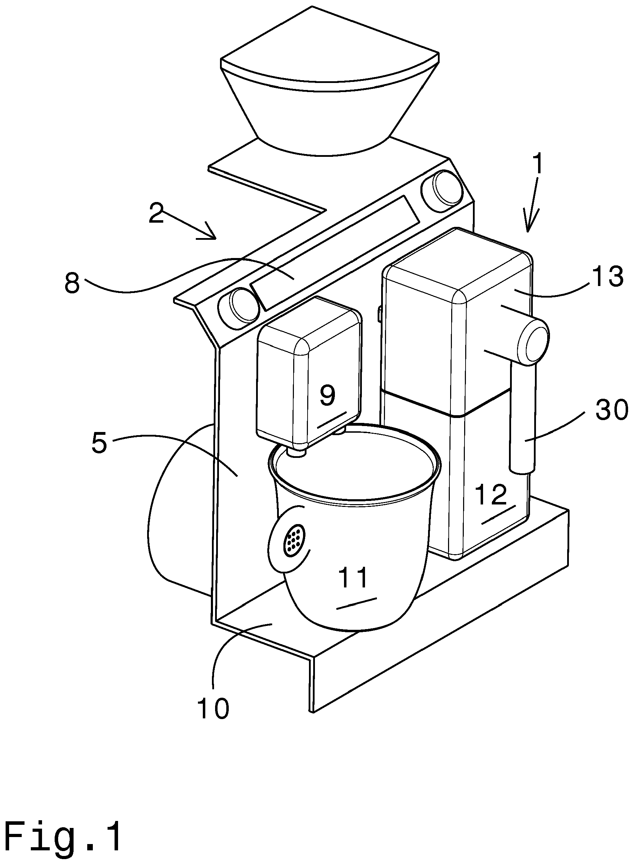

Figure 1 is a perspective view from the exterior of the front part of a coffee machine with the emulsifier device connected;

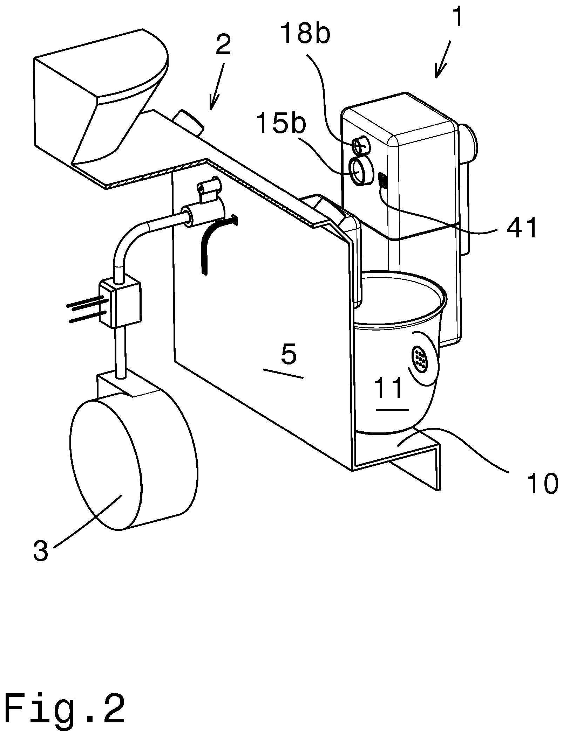

Figure 2 is a perspective view from the interior of the front part of the coffee machine with the emulsifier device detached;

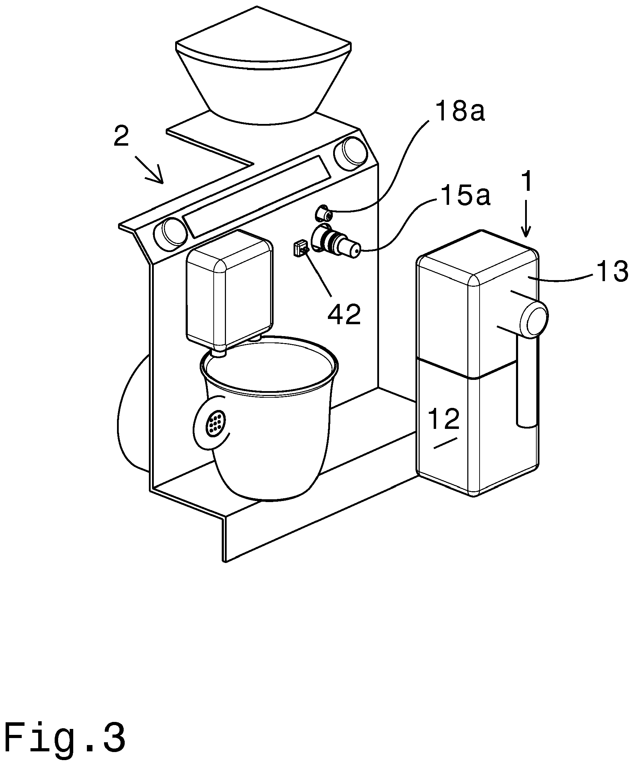

Figure 3 is a perspective view from the exterior of the front part of the coffee machine with the emulsifier device detached;

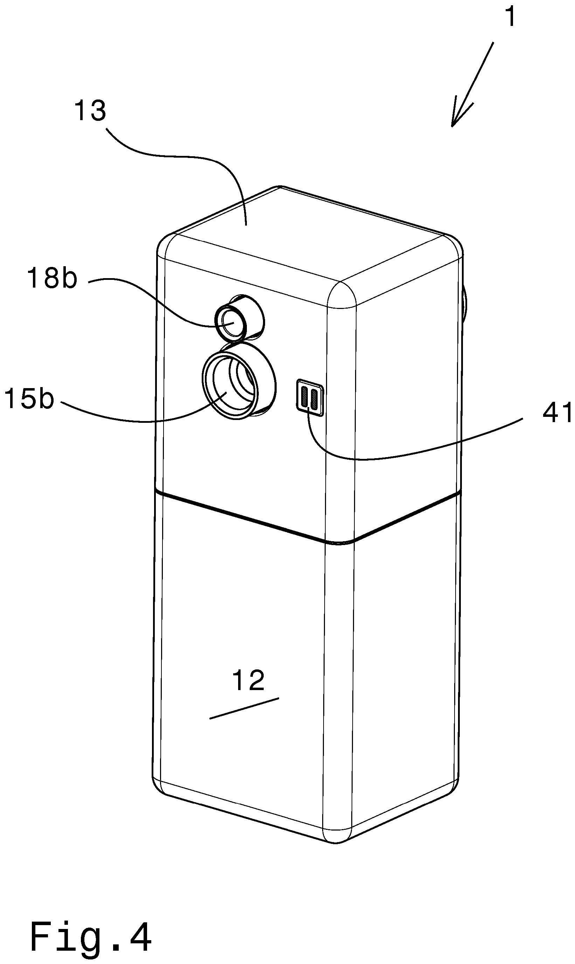

Figure 4 is a rear perspective view of the emulsifier device;

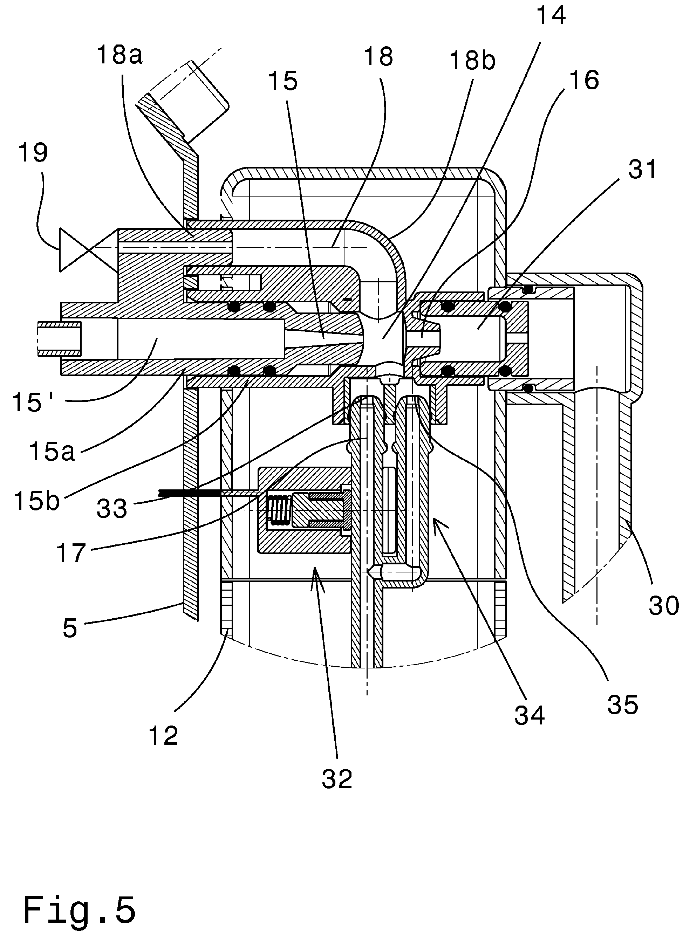

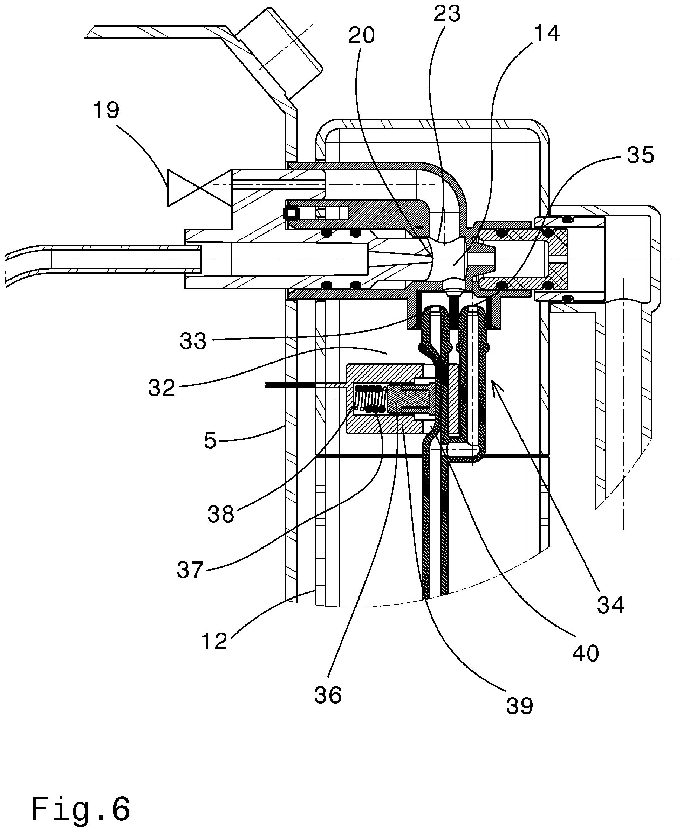

Figures 5 and 6 are side elevation views of a detail of the emulsifier device sectioned in a vertical plane in the two states of the pinch valve.

With reference to the figures, a milk emulsifier device 1 is shown, said device being connectable to a steam generator 3 provided in the coffee machine.

The emulsifier device 1 comprises a milk container 12 and a hollow body 13 removably engaged with the milk container 12.

In addition to performing the function of emulsifying milk, the hollow body 13 also serves as a cover for closing the milk container 12 and it is thus applied on the open top of the milk container 12.

The hollow body 13 comprises a Venturi mixing chamber 14 connected to a steam inflow channel 15, to a milk outflow channel 16, to a Venturi milk suctioning channel 17 positioned in the milk container 12 and to a Venturi air suctioning channel 18 supplied with a shut-off valve 19 in communication with the outside environment.

The shut-off valve 19 is a solenoid valve that can be controlled by an electronic controller of the coffee machine 2, but in one case, which is not shown, it can also be a manually-controlled shut-off valve and in that case, it must be arranged in a position that is accessible to the user.

The steam inflow channel 15 and the milk outflow channel 16 extend along a horizontal axis and the milk suctioning channel 17 extends with a vertical axis and is joined at the bottom with the mixing chamber 14, whereas the air suctioning channel 18 has a segment that extends horizontally comprising the inlet section and a segment extending vertically comprising the outlet section 23 that is joined at the top to the mixing chamber 14.

As illustrated, the air suctioning channel 18 and the steam inflow channel 15 each have a first component 18a, 15a that is supported in a fixed manner by the coffee machine 2 and sealingly and removably engaged in a respective second component 18b, 15b afforded in the hollow body 13.

In this manner, the milk container 12 and the hollow body 13 acting as a cover can be detached from the coffee machine 2 to place them in a refrigerator, to clean, fill or empty them or to perform maintenance procedures.

To enable it to be connected to the second component 18b, 15b supported by the hollow body 13, the first component 18a, 15a supported by the coffee machine 2 projects out from the front wall 5 of the shell of the coffee machine 2 where a control panel 8, a coffee dispenser 9 and a support surface 10 for cups 11 are also provided.

The steam inflow channel 15 is coaxial with the milk outflow channel 16 and it has a section that gradually decreases in the end segment comprising the outlet section 20 so as to accelerate the flow of steam and create a drop in pressure inside the mixing chamber 14 which brings about the milk and air suctioning process by Venturi effect.

The hollow body 13 further comprises an external milk dispensing channel 30 connected to the milk outflow channel 16.

The external milk dispensing channel 30 is hinged to the rest of the hollow body 13 so as to rotate between an operative position, in which it is oriented with an inclination for dispensing directly in a cup 11, and an at-rest position, in which it is oriented for discharging vertically, downwards.

A first post-mixing chamber 31 is interposed between the milk outflow channel 16 and the external milk dispensing channel 30.

The milk suctioning channel 17 is deformable and a pinch valve 32 operates on it to regulate the flow of suctioned milk.

Advantageously, the milk suctioning channel 17 has a first calibrated hole 33 for connection to the mixing chamber 14.

Advantageously, there is provided an auxiliary channel 34 for suctioning milk into the mixing chamber 14 by Venturi effect, having a second calibrated hole 35 for connection to the mixing chamber 14.

Advantageously, the pinch valve 32 can be activated in a flow enabling state, corresponding to the suctioning of milk into the mixing chamber 14 through the first calibrated hole 33 and the second calibrated hole 35, and a flow interruption state, corresponding to the suctioning of milk into the mixing chamber 14 solely through the second calibrated hole 35.

The milk suctioning channel 17 with the pinch valve 32 and the auxiliary milk suctioning channel 34 are positioned inside the milk container 12.

In the preferred solution illustrated herein, the auxiliary milk suctioning channel 34 is formed particularly by a branch of the milk suctioning channel 17 located upstream of the pinch valve 32, with reference to the direction of flow of the suctioned milk.

Moreover, in the preferred solution illustrated herein, the first calibrated hole 33 and the second calibrated hole 35 are identical, have parallel axes and are equidistant from the axis 15' of the steam inflow channel 15.

Obviously, in a different solution not illustrated herein, but which falls within the scope of the invention, the milk suctioning channel 17 and the auxiliary milk suctioning channel 34 can be separated and/or have calibrated holes of different sizes and/or different orientations and/or different distances from the axis of the steam inflow channel 15.

The number of auxiliary milk suctioning channels provided with a respective calibrated hole for connection to the mixing chamber 14 can also be greater than one.

In the case in which more than one auxiliary milk suctioning channel is provided, at least one auxiliary channel can, in turn, be deformable and associated with a respective pinch valve that operates to enable or interrupt the flow of milk.

More specifically, the pinch valve 32 consists of a solenoid valve.

The solenoid valve has a ferromagnetic core 36 that can be activated by the solenoid in opposition to an elastic element 37, particularly a helical spring arranged in a specific seat 38 afforded by the stator body 39 of the pinch valve 32.

The stator body 39, in turn, has a housing compartment 40 for a segment of the milk suctioning channel 17 accessible to the ferromagnetic core 36.

The ferromagnetic core 36 is guided in translational motion perpendicular to the axis of the segment of the milk suctioning channel 17 positioned in the housing compartment 40 in the flow enabling state, in which the segment of the milk suctioning channel 17 positioned in the housing compartment 40 is not deformed, and the flow interruption position, in which the segment of the milk suctioning channel 17 positioned in the housing compartment 40 is pressed until the complete collapse of the section thereof between the ferromagnetic core 36 and the wall of the housing compartment 40.

The pinch valve 32 is electrically connected to an electric connector 41 supported externally by the hollow body 13, and in particular by the outer wall of the hollow body 13, which, in use, faces the front wall 5 of the shell of the coffee machine 2.

Externally of the front wall 5 of its shell, the coffee machine 2 in turn has an electric connector 42 congruent with the electric connector 41 present on the hollow body 13 for supplying power to the pinch valve 32.

The electric connector 42 supported by the coffee machine 2 at the front wall 5 of the shell thereof is connected to an internal electronic controller of the coffee machine 2.

In practice, the emulsifier device 1 is manually associated with the coffee machine 2 by the user with a simple manoeuvre that brings about the engagement of the first and the second component 15a, 15b of the steam inflow channel 15, of the first and the second component 18a, 18b of the air suctioning channel 18, and of the electric connectors 41, 42.

Once the emulsifier device 1 has been connected to the coffee machine 2, it rests on the horizontal support surface 10.

The emulsifier device 1 is managed by the electronic controller of the coffee machine 2 and it operates according to the selected dispensing cycle.

For example, let us now assume that with a given flow of steam and a given dispensing time, one wishes to obtain a given amount of hot milk with froth or substantially the same amount of hot milk without froth substantially at the same temperature.

This implies that in the two cases, a flow of milk substantially of equal magnitude must be suctioned into the mixing chamber 14.

In this case, it can be envisaged that when the cycle for dispensing hot milk with froth is selected, the controller of the coffee machine 2 activates the opening of the shut-off valve 19 and the opening of the pinch valve 32 so that the milk is suctioned trough both calibrated holes 33, 35, whereas when the cycle for dispensing hot milk without froth is selected, the controller of the coffee machine 2 activates the closing of the shut-off valve 19 and the closing of the pinch valve 32 so that the milk is suctioned only trough the second calibrated hole 35.

In fact, the flow of milk that is suctioned into the mixing chamber 14 depends on the magnitude of the pressure drop generated in the mixing chamber 14 as a result of the passage of the flow of steam, but also on the total milk suction section.

In the cycle for dispensing hot milk with froth, the opening of the of the air suctioning channel causes a decrease in the velocity of the flow of suctioned milk and to compensate for this decrease in velocity, the suction section is increased, using both calibrated holes 33, 35.

In the cycle for dispensing hot milk without froth, the closing of the air suctioning channel causes an increase in the velocity of the flow of suctioned milk and to compensate for the increase in velocity, the suction section is decreased, using only the second calibrated hole 35.

Obviously, by increasing the number of milk suctioning channels and of the latter, the number of those equipped with a pinch valve for flow interruption, it is possible to achieve superior-quality regulation of the temperature of the milk dispensed with or without froth, owing to the number of possible combinations of the states of the pinch valves.

The emulsifier device thus conceived is susceptible to numerous modifications and variants, all of which falling within the scope of the inventive concept. Moreover, all details may be replaced with other technically equivalent elements.

Lastly, the materials used, as well as the dimensions, may be of any type, according to needs and the state of the art.

## Claims

1. A Venturi milk emulsifier device (1) comprising a hollow body (13) having a mixing chamber (14), a channel (15) for inflow of steam into the mixing chamber (14), a channel (18) for suctioning air into the mixing chamber (14) by Venturi effect, a deformable channel (17) for suctioning milk into the mixing chamber (14) by Venturi effect, a pinch valve (32) operating on said deformable channel (17) for regulating the flow of suctioned milk, and a channel (16) for outflow of milk from the mixing chamber (14) wherein said milk suctioning channel (17) has a first calibrated hole (33) for connection to the mixing chamber (14), **characterized in that** there is provided at least one auxiliary channel (34) for suctioning milk into the mixing chamber (14) by Venturi effect, having a second calibrated hole (35) for connection to the mixing chamber (14), and **in that** said pinch valve (32) can be activated in a flow enabling state, corresponding to the suctioning of milk into the mixing chamber (14) through said first and second calibrated holes (33, 35), and a flow interruption state, corresponding to the suctioning of milk into the mixing chamber (14) solely through said second calibrated hole (35).

2. The milk emulsifier device (1) according to claim 1, **characterized in that** it comprises a milk container (12), inside of which said milk suctioning channel (17) with said pinch valve (32) and said auxiliary milk suctioning channel (34) are positioned.

3. The milk emulsifier device (1) according to claim 1, **characterized in that** said auxiliary milk suctioning channel (34) is formed by a branch of said milk suctioning channel (17) located upstream of said pinch valve (32).

4. The milk emulsifier device (1) according to claim 1, **characterized in that** said pinch valve (32) consists of a solenoid valve.

5. The milk emulsifier device (1) according to the preceding claim, **characterized in that** said pinch valve (32) is connected to an electric connector (41) supported externally by said hollow body (13).

6. The milk emulsifier device (1) according to the preceding claim, **characterized in that** said pinch valve (32) comprises a ferromagnetic core (36) that is translatable perpendicularly to the axis of said milk suctioning channel (17).

7. The milk emulsifier device (1) according to any one of the preceding claims, **characterized in that** said first and second calibrated holes (33, 35) connecting to the mixing chamber (14) are identical.

8. The milk emulsifier device (1) according to any one of the preceding claims, **characterized in that** said first and second calibrated holes (33, 35) connecting to the mixing chamber (14) have parallel axes.

9. The milk emulsifier device (1) according to any one of the preceding claims, **characterized in that** said first and second calibrated holes (33, 35) connecting to the mixing chamber (14) are equidistant from the axis (15') of said steam inflow channel (15).

10. The milk emulsifier device (1) according to the preceding claim, **characterized in that** said air suctioning channel (18) is supplied with a shut-off valve (19) for flow regulation.

11. A coffee machine (2) **characterized in that** it is connected to an emulsifying device (1) in accordance with any one of the preceding claims.

12. The coffee machine (2) according to the preceding claim, **characterized in that** externally of a front wall (5) of a shell thereof, it has an electric connector (42) congruent with said electric connector (41) present on said hollow body (13) for supplying power to said pinch valve (32).

13. The coffee machine (2) according to the preceding claim, **characterized in that** said electric connector (42) present externally of said front wall (5) of said shell is connected to an electronic controller provided in said coffee machine (2).

14. A method for producing hot milk with or without froth using a coffee machine (2) in accordance with any one of claims 11 to 13, **characterized in that** it switches said pinch valve (32) into said enabling state when a cycle for dispensing hot milk with froth is selected and into said interruption state when a cycle for dispensing hot milk without froth is selected.

## Patentansprüche

1. Venturi-Milchemulgatorvorrichtung (1) umfassend einen Hohlkörper (13) mit einer Mischkammer (14), einem Kanal (15) zum Einströmen von Dampf in die Mischkammer (14), einem Kanal (18) zum Ansaugen von Luft in die Mischkammer (14) durch Venturieffekt, einem verformbaren Kanal (17) zum Ansaugen von Milch in die Mischkammer (14) durch Venturieffekt, einem Quetschventil (32), das auf dem verformbaren Kanal (17) zum Regulieren des Stroms der angesaugten Milch wirkt, und einem Kanal (16) zum Abfließen von Milch aus der Mischkammer (14), wobei der Milchansaugkanal (17) ein erstes kalibriertes Loch (33) zur Verbindung mit der Mischkammer (14) aufweist, **dadurch gekennzeichnet, dass** mindestens ein Hilfskanal (34) zum Ansaugen von Milch in die Mischkammer (14) durch Venturi-Effekt mit einem zweiten kalibrierten Loch (35) zur Verbindung mit der Mischkammer (14) vorgesehen ist, und dass das Quetschventil (32) in einem Stromfreigabezustand, der dem Ansaugen von Milch in die Mischkammer (14) durch das erste und zweite kalibrierte Loch (33, 35) entspricht, und einem Stromunterbrechungszustand aktiviert werden kann, der dem Ansaugen von Milch in die Mischkammer (14) ausschließlich durch das zweite kalibrierte Loch (35) entspricht.

2. Milchemulgatorvorrichtung (1) nach Anspruch 1, **dadurch gekennzeichnet, dass** sie einen Milchbehälter (12) umfasst, innerhalb dessen der Milchansaugkanal (17) mit dem Quetschventil (32) und dem Hilfsmilchansaugkanal (34) positioniert sind.

3. Milchemulgatorvorrichtung (1) nach Anspruch 1, **dadurch gekennzeichnet, dass** der Hilfsmilchansaugkanal (34) durch einen Zweig des Milchansaugkanals (17) gebildet ist, der stromaufwärts des Quetschventils (32) angeordnet ist.

4. Milchemulgatorvorrichtung (1) nach Anspruch 1, **dadurch gekennzeichnet, dass** das Quetschventil (32) aus einem Magnetventil besteht.

5. Milchemulgatorvorrichtung (1) nach dem vorhergehenden Anspruch, **dadurch gekennzeichnet, dass** das Quetschventil (32) mit einem elektrischen Steckverbinder (41) verbunden ist, der extern von dem Hohlkörper (13) getragen wird.

6. Milchemulgatorvorrichtung (1) nach dem vorhergehenden Anspruch, **dadurch gekennzeichnet, dass** das Quetschventil (32) einen ferromagnetischen Kern (36) umfasst, der senkrecht zur Achse des Milchansaugkanals (17) verschiebbar ist.

7. Milchemulgatorvorrichtung (1) nach einem der vorhergehenden Ansprüche, **dadurch gekennzeichnet, dass** das erste und zweite kalibrierte Loch (33, 35), die mit der Mischkammer (14) verbunden sind, identisch sind.

8. Milchemulgatorvorrichtung (1) nach einem der vorhergehenden Ansprüche, **dadurch gekennzeichnet, dass** das erste und zweite kalibrierte Loch (33, 35), die mit der Mischkammer (14) verbunden sind, parallele Achsen aufweisen.

9. Milchemulgatorvorrichtung (1) nach einem der vorhergehenden Ansprüche, **dadurch gekennzeichnet, dass** das erste und zweite kalibrierte Loch (33, 35), die mit der Mischkammer (14) verbunden sind, äquidistant von der Achse (15') des Dampfzufuhrkanals (15) liegen.

10. Milchemulgatorvorrichtung (1) nach dem vorstehenden Anspruch, **dadurch gekennzeichnet, dass** der Luftansaugkanal (18) mit einem Absperrventil (19) zur Stromregelung versehen ist.

11. Kaffeemaschine (2), **dadurch gekennzeichnet, dass** sie mit einer Emulgiervorrichtung (1) nach einem der vorhergehenden Ansprüche verbunden ist.

12. Kaffeemaschine (2) nach dem vorhergehenden Anspruch, **dadurch gekennzeichnet, dass** sie außerhalb einer Vorderwand (5) einer Schale davon einen elektrischen Steckverbinder (42) aufweist, der mit dem elektrischen Steckverbinder (41), der auf dem Hohlkörper (13) vorhandenen ist, kongruent ist, um dem Quetschventil (32) Energie zuzuführen.

13. Kaffeemaschine (2) nach dem vorhergehenden Anspruch, **dadurch gekennzeichnet, dass** der außerhalb der Vorderwand (5) der Schale vorhandene elektrische Steckverbinder (42) mit einer in der Kaffeemaschine (2) vorgesehenen elektronischen Steuerung verbunden ist.

14. Verfahren zur Herstellung von heißer Milch mit oder ohne Schaum unter Verwendung einer Kaffeemaschine (2) nach einem der Ansprüche 11 bis 13, **dadurch gekennzeichnet, dass** es das Quetschventil (32) in den Freigabezustand schaltet, wenn ein Zyklus zur Abgabe von heißer Milch mit Schaum ausgewählt wird, und in den Unterbrechungszustand, wenn ein Zyklus zur Abgabe von heißer Milch ohne Schaum ausgewählt wird.

## Revendications

1. Dispositif émulsifiant (1) de lait à Venturi comprenant un corps creux (13) comportant une chambre de mélange (14), un canal (15) pour l'entrée de vapeur dans la chambre de mélange (14), un canal (18) pour aspirer l'air dans la chambre de mélange (14) par effet Venturi, un canal déformable (17) pour aspirer le lait dans la chambre de mélange (14) par effet Venturi, un robinet à manchon déformable (32) agissant sur ledit canal déformable (17) pour régler le débit de lait aspiré, et un canal (16) pour la sortie du lait de la chambre de mélange (14), dans lequel ledit canal d'aspiration (17) de lait comporte un premier orifice calibré (33) pour le raccordement à la chambre de mélange (14), **caractérisé en ce qu'**il est prévu au moins un canal auxiliaire (34), pour aspirer le lait dans la chambre de mélange (14) par effet Venturi, comportant un second orifice calibré (35) pour le raccordement à la chambre de mélange (14), et **en ce que** ledit robinet à manchon déformable (32) peut être activé dans un état d'activation de flux, correspondant à l'aspiration du lait dans la chambre de mélange (14) à travers lesdits premier et second orifices calibrés (33, 35), et un état d'interruption de flux, correspondant à l'aspiration de lait dans la chambre de mélange (14) uniquement à travers ledit second orifice calibré (35).

2. Dispositif émulsifiant (1) de lait selon la revendication 1, **caractérisé en ce qu'**il comprend un récipient à lait (12) à l'intérieur duquel sont positionnés ledit canal d'aspiration (17) de lait avec ledit robinet à manchon déformable (32) et ledit canal d'aspiration auxiliaire (34) de lait.

3. Dispositif émulsifiant (1) de lait selon la revendication 1, **caractérisé en ce que** ledit canal d'aspiration auxiliaire (34) de lait est formé par une branche dudit canal d'aspiration (17) de lait située en amont dudit robinet à manchon déformable (32) .

4. Dispositif émulsifiant (1) de lait selon la revendication 1, **caractérisé en ce que** ledit robinet à manchon déformable (32) consiste en une électrovanne.

5. Dispositif émulsifiant (1) de lait selon la revendication précédente, **caractérisé en ce que** ledit robinet à manchon déformable (32) est relié à un connecteur électrique (41) supporté extérieurement par ledit corps creux (13).

6. Dispositif émulsifiant (1) de lait selon la revendication précédente, **caractérisé en ce que** ledit robinet à manchon déformable (32) comprend un noyau ferromagnétique (36) pouvant translater perpendiculairement à l'axe dudit canal d'aspiration (17) de lait.

7. Dispositif émulsifiant (1) de lait selon l'une quelconque des revendications précédentes, **caractérisé en ce que** lesdits premier et second orifices calibrés (33, 35) reliant la chambre de mélange (14) sont identiques.

8. Dispositif émulsifiant (1) de lait selon l'une quelconque des revendications précédentes, **caractérisé en ce que** lesdits premier et second orifices calibrés (33, 35) reliant la chambre de mélange (14) comportent des axes parallèles.

9. Dispositif émulsifiant (1) de lait selon l'une quelconque des revendications précédentes, **caractérisé en ce que** lesdits premier et second orifices calibrés (33, 35) reliant la chambre de mélange (14) sont équidistants de l'axe (15') dudit canal d'entrée (15) de vapeur.

10. Dispositif émulsifiant (1) de lait selon la revendication précédente, **caractérisé en ce que** le canal d'aspiration de l'air (18) dispose d'une soupape d'arrêt (19) pour le réglage du flux.

11. Machine à café (2) **caractérisée en ce qu'**elle est reliée à un dispositif émulsifiant (1) selon l'une quelconque des revendications précédentes.

12. Machine à café (2) selon la revendication précédente, **caractérisée en ce que** extérieurement à une cloison antérieure (5) de sa coque, celle-ci comporte un connecteur électrique (42) congruent au dit connecteur électrique (41) présent sur ledit corps creux (13) pour alimenter ledit robinet à manchon déformable (32).

13. Machine à café (2) selon la revendication précédente, **caractérisée en ce que** ledit connecteur électrique (42) présent extérieurement à ladite cloison antérieure (5) de ladite coque est relié à un contrôleur électrique prévu dans ladite machine à café (2) .

14. Procédé de production de lait chaud avec ou sans mousse utilisant une machine à café (2) selon l'une quelconques des revendications de 11 à 13, **caractérisé en ce qu'**il permute ledit robinet à manchon déformable (32) dans ledit état d'activation lorsqu'un cycle destiné à distribuer du lait chaud avec de la mousse est sélectionné et dans ledit état d'interruption lorsqu'un cycle destiné à distribuer du lait chaud sans mousse est sélectionné.
